# EUROPEAN PATENT APPLICATION

(11) **EP 1 195 086 A2**
(43) Date of publication of application: **10.04.2002**
(21) Application number: 01123140.4
(22) Date of filing: 27.09.2001
(51) Int. Cl.: A01K 15/02

(54) **Livestock guidance system and automatic feeding system using this system**

(30) Priority: 29.09.2000 JP 2000299874
(71) Applicant: Tsuchiya Dairy Equipment MFG Co., Hokkaido (JP); Kashiwamura, Fumiro, Obihiro-shi, Hokkaido (JP); Seo, Tetsuya, Obihiro-shi, Hokkaido (JP)
(72) Inventor: Tsuchiya, Noriaki, Obihiro, Hokkaido (JP); Kashiwamura, Fumiro, Obihiro-shi, Okkaido (JP); Seo, Tetsuya 42-2 Lodgingd of Obihiro University, Inadacho-Nishi 2sen, Hokkaido (JP)
(74) Representative: Hug Interlizenz AG

(57) **Abstract**

The object of the invention is to provide a livestock guidance system for solving the load of a dairy farmer in the work of guiding the herd of livestock by making the livestock itself take required action and an automatic feeding system using the guidance system. A stimulus generator 1 that applies a stimulus to the skin of all or plural in the herd of livestocks and control means 2 that controls the operation of the stimulus generator 1 are provided, and selected livestocks are guided by inputting the output of the control means 2 to each stimulus generator 1 of selected plural or one out of livestocks on which the stimulus generator 1 is mounted.

## Description

### 2. BACKGROUND OF THE INVENTION

### FIELD OF THE INVENTION

The present invention relates to the guidance system of livestock including cattle, a horse, a sheep and a pig and an automatic feeding system using this guidance system, detailedly relates to a guidance system that guides plural or one livestock selected in a herd of livestock and an automaticfeeding system using this guidance system.

### DESCRIPTION OF THE RELATED ART

In the management of livestock bred in a herd, various work such as feeding including nursing, milking, service and movement to a pasture is included.

### 3. SUMMARY OF THE INVENTION

In case specific feed such as concentrated feed is supplied to livestock, the supplied quantity is required to be managed every individual, however, in case livestock is pastured in crowds, the control is extremely difficult.

Currently, an automatic feeder for feeding concentrated feed every individual or nursing a baby calf exists, however, as feeding start time in the whole herd is substantially the same, the herd crowds around a feeding area and there is an individual that cannot feed sufficiently in the herd.

To avoid such a situation, the number of automatic feeders is required to be increased, however, great expense is required.

For milking, an automatic milking system exists, however, movement to a milking place is left to the spontaneous action of an individual of livestock and even if milking three or four times a day is expected, livestock does not necessarily visit the milking place at suitable time and efficient milking can be hardly expected.

This reason may be that livestock does not understand milking time, however, in the current system, it is not considered to make an individual of livestock recognize different milking time and milking time is left to the intention of livestock.

That is, it is impossible to make an individual of livestock recognize time to visit milking facilities.

For service, in a public rearing farm for example, work for selecting livestock suitable for service out of livestock pastured in a large pastureland and moving them to a mating place and work for moving them to a pasture are included.

To move the whole herd, heretofore, livestock called leading livestock was first moved to make the rest follow the leading livestock, however, currently, a workman himself/herself guides the herd of livestock.

Much of the above-mentioned work troubles workmen and is a large burden to workmen of dairy farming and livestock industry which are said to require long working hours.

In small-scale dairy cattle housing and facilities, breeding using a tether which is easy to manage every individual is often made, however, in the breeding of many livestock which is considered to increase in future, it is estimated that pasturing in a free stall barn increases.

However, for a problem feared in the case of pasturing in a herd, it can be given that management every individual is neglected.

Then, the invention has to provide a livestock guidance system for removing the burden of a manager of livestock of a dairy farmer in work for guiding the herd of livestock by making livestock itself take required action and an automatic feeding system using the guidance system as its object.

Technical means adopted by the invention to achieve the object includes a stimulus generator 1 which is mounted on livestock and applies stimulus to the skin of the livestock and control means 2 that controls the operation of the stimulus generator 1 and is embodied as a system that guides only livestock on which the stimulus generator 1 is mounted by mounting the stimulus generator 1 on selected one or plural livestock in the herd of the livestock or the whole herd and inputting the output of the control means 2 to the stimulus generator 1 of the selected one or plural livestock out of the livestock on which the stimulus generator 1 is mounted according to Claim 1 of the invention.

According to Claim 1 of the invention, when the output of the control means 1 is input to the stimulus generator 2, the stimulus generator 2 is operated and a stimulus is applied to livestock on which the stimulus generator is mounted and which is freely pastured without being tethered.

The livestock to which the stimulus is applied feels the stimulus and moves to a place learned beforehand including a feeding (nursing) place, a milking place, a mating place and a different pasture.

Therefore, the guidance of pastured livestock to a target place at time intended by a manager becomes possible without labor.

### 4. BRIEF DESCRIPTION OF THE DRAWINGS

FIG. 1 is a block diagram showing an automatic feeding system using a guidance system;
FIG. 2 is a block diagram showing control means;
FIG. 3 is a flowchart for explaining the input/output process of the automatic feeding system;

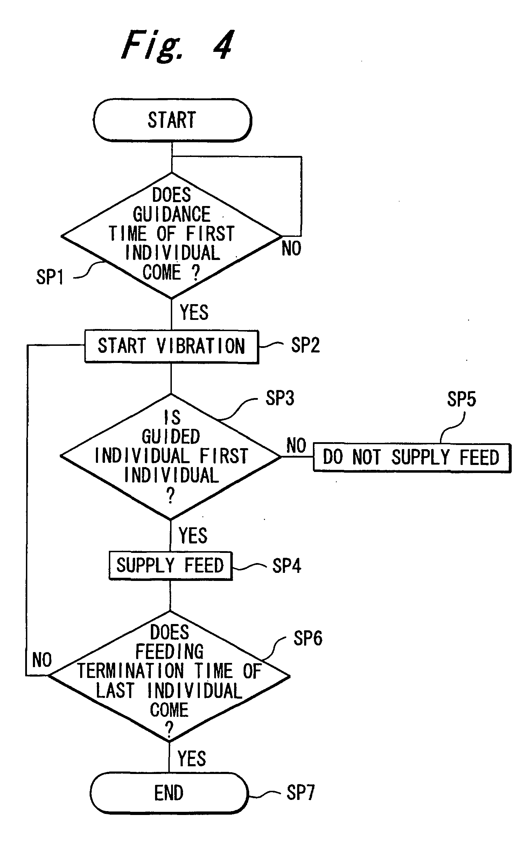

FIG. 4 is a flowchart for explaining the input/output process of an automatic feeding system in another embodiment; and
FIG. 5 is a flowchart for explaining the input/output process of an automatic feeding system in further another embodiment.

### 5. DESCRIPTION OF THE PREFERRED EMBODIMENTS

In the invention, it is made learned beforehand utilizing the learning ability of an animal that for example, when the animal can feel a stimulus, it can eat feed.

Livestock that learned this moves to a learned place when it feels a stimulus.

A stimulus generated by the stimulus generator 1 includes all stimuli which livestock can feel such as vibration, pressure and electricity.

These stimuli are applied by force and during time respectively to the extent that they at least put no stress on livestock so as to prevent the health of the livestock from being deteriorated.

The control means 2 controls the operation of the stimulus generator 1 and for a control method, control that the condition of output is set in the control means 2 beforehand and the control means 2 automatically outputs a control signal for operating the stimulus generator 1 according to the set condition and control that an operator arbitrarily outputs a control signal for operating the stimulus generator 1 according to the set condition can be given.

For means for inputting output from the control means 2 to the stimulus generator, remote output/input means that transmits from the control means 2 by radio and receives on the side of the stimulus generator can be given.

Means that integrates the stimulus generator 1 and the control means 2 as one circuit and inputs/outputs via the circuit can be also given.

In this case, it is desirable that the control means 2 integrated with the stimulus generator 1 is controlled by remote operation and in that case, a condition input to the control means 2 can be set or the setting can be varied respectively by radio.

For the setting of a condition input to the control means 2, the operation start time of the stimulus generator 1 is set to different time every group composed of an individual or plural and it is set that when the operation start time comes, the control means outputs a signal (Claim 2).

According to Claim 2, livestock can be automatically moved every individual or every one of plural groups into which the herd of the livestock is classified with time difference.

The invention is particularly suitable for solving crowdedness in a feeding (nursing) place and controlling visit time to an automatic milking system.

In the case of feeding, the setting of the operation start time of the stimulus generator 1 of an individual or a group is enabled by setting the operation start time of the stimulus generator 1 of a selected individual in the herd of livestock.

That is, when the operation start time of the stimulus generator 1 mounted on an individual or a group comes, the control means 2 automatically outputs a signal, the stimulus generator 1 is operated and only the individual or the group can be moved to a feeding place and a milking place.

Also, when the operation start time of the stimulus generator 1 mounted on an individual or a group comes, the control means 2 automatically outputs a signal, the stimulus generator 1 is operated and when feed intake termination time comes, the stimulus generator 1 on the next individual or the next group is operated.

That is, it is repeated up to the final group that when the operation start time of the stimulus generator 1 mounted on an individual or a group comes, the control means 2 automatically outputs a signal, the stimulus generator 1 is operated, only the individual or the group is moved to a feeding place, at the same time that the feed intake termination time of the individual comes, the stimulus generator 1 of the next group is operated and the individual or the group is moved to the feeding place to make the individual or the group take feed.

Hereby, as only an individual or one group comes to the feeding place, the crowdedness of the feeding place is solved and required feed can be supplied to only selected livestock.

In the case of milking, the frequency of milking a day and each milking start time are set, when the operation start time of the stimulus generator 1 mounted on an individual or a group comes, the control means 2 automatically outputs a signal, the stimulus generator 1 is operated and only the individual or the group can be moved to a milking place.

The setting of time is arbitrary and is not limited to the setting described above.

Claim 3 of the invention relates to an automatic feeding system using the guidance system according to Claim 1 or Claim 2 of the invention and the automatic feeding system is characterized in that an identification unit 3 that identifies livestock guided by the stimulus generator 1 is provided and only when the identification unit 3 identifies the guided livestock, the control means 2 operates an automatic feeding unit 4 to feed the livestock.

According to Claim 3, livestock that comes to a feeding place is all identified by the identification unit 3 and when the livestock is recognized as livestock guided by the stimulus generator 1, the control means 2 outputs a signal and operates the automatic feeding unit 4.

When livestock identified by the identification unit 3 is recognized to be not livestock guided by the stimulus generator 1, the automatic feeding unit 4 is not operated because the controller 2 outputs nothing.

Therefore, only livestock for feed to be taken can be fed and a situation that special feed for specific livestock to take is supplied to another livestock can be avoided.

Feeding in this case means all that nourishes livestock and also includes supplying nutrition for baby livestock, that is, nursing.

The identification unit 3 according to the invention can be formed by configuration that a sensor detects and identifies a signal transmitted from a microchip storing a number or a sign allocated to an ear marker mounted on the ear of livestock for example or the stimulus generator 1 for individual identification.

### EXAMPLES OF THE PREFERRED EMBODIMENTS

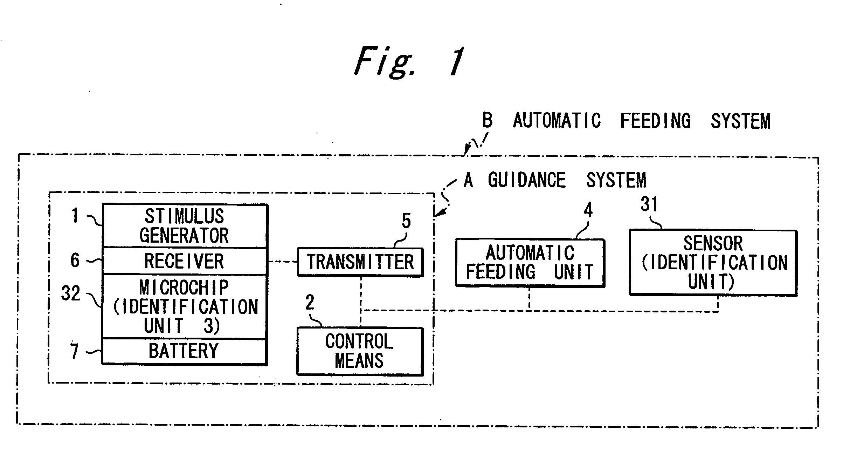

To explain examples of the preferred embodiments of the invention referring to the drawings, FIG. 1 is a block diagram showing an automatic feeding system B according to Claim 3 of the invention using a livestock guidance system A according to Claim 1 and Claim 2.

The automatic feeding system B is provided with the guidance system A, an identification unit 3 and an automatic feeding unit 4.

The guidance system A is provided with a stimulus generator 1 that applies a stimulus by vibration to livestock, a controller 2 that controls each operation of the stimulus generator 1, the identification unit 3 and the automatic feeding unit 4, a transmitter 5 that transmits output from the control means 2 and a receiver 6 that receives transmission from the transmitter 5 and inputs it to the stimulus generator 1.

It is desirable that the stimulus generator 1 has structure used for a mobile telephone that the stimulus generator is vibrated when an electric wave is received and is coated with material easily transmissible and in addition, waterproof such as rubber and soft synthetic resin (not shown) .

In case this stimulus generator 1 is mounted on livestock, the mounted part is arbitrary, however, it is desirable that the stimulus generator 1 is fitted to a collar put on the neck of the livestock so that the stimulus generator 1 is touched to the skin of the livestock (not shown).

The stimulus generator 1 is operated by electric power and the power is secured by using a battery 7 represented by a small-sized battery or a solar battery.

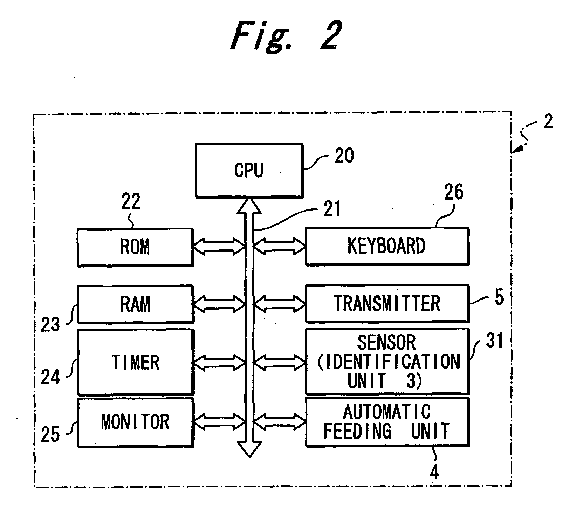

A case that a personal computer is used for the control means 2 is shown and in the control means 2, as shown in FIG. 2, ROM 22, RAM 23, a timer 24, a monitor 25, a keyboard 26, the transmitter 5, a sensor 31 as the identification unit 3 and the automatic feeding unit 4 are connected to CPU 20 via a bus 21.

A basic program (OS) executed by CPU 20 for operating each unit is stored in ROM 22.

An application program run on the basic program is stored in RAM 23 and further, RAM 23 has a storage region for temporarily storing various data for operating the stimulus generator 1, the transmitter 5, the automatic feeding unit 4, the timer 24 and the sensor 31.

The timer 24 measures time based upon the guidance start time and the feeding termination time of each group and the vibration time of the stimulus generator 1 respectively input.

The keyboard 25 is input means and the monitor 26 is well-known display means of input data and read data.

The identification unit 3 is composed of the sensor 31 and a microchip 32 in which the data every individual of livestock is stored and which transmits this data as a signal.

It is desirable that this microchip 32 (not shown) is integrated with the stimulus generator 1 with the microchip coated with rubber together with the stimulus generator 1 and electric power is supplied to the microchip together with the stimulus generator 1.

In this embodiment, the sensor 31 is arranged in a feed intake (not shown) in the automatic feeding unit 4, when livestock plunges its neck into the feed intake, the sensor 31 detects a signal transmitted by the microchip 32 fitted to the collar and the control means 2 operates the automatic feeding unit 4 based upon the detected signal data.

The automatic feeding unit 4 is not described in detail because it has well-known structure, however, multiple feed intakes are provided so that an individual of livestock can take feed and feed for once is automatically supplied to each feed intake.

The control means 2 controls the quantity of the supplied feed based upon input data and for example, when data is set so that the quantity of supplied feed varies every individual or every group in case livestock is divided into individuals or groups based upon the quantity of supplied feed, the individual or the group can take the suitable quantity of feed.

The transmitter 5 transmits the output of the control means 2 to the receiver 6 by an electric wave.

When the receiver 6 receives the electric wave, the stimulus generator 1 is vibrated by the reception.

It is desirable that the receiver 6 is coated with rubber together with the stimulus generator 1 and is integrated with the stimulus generator 1 and electric power is supplied in common (not shown).

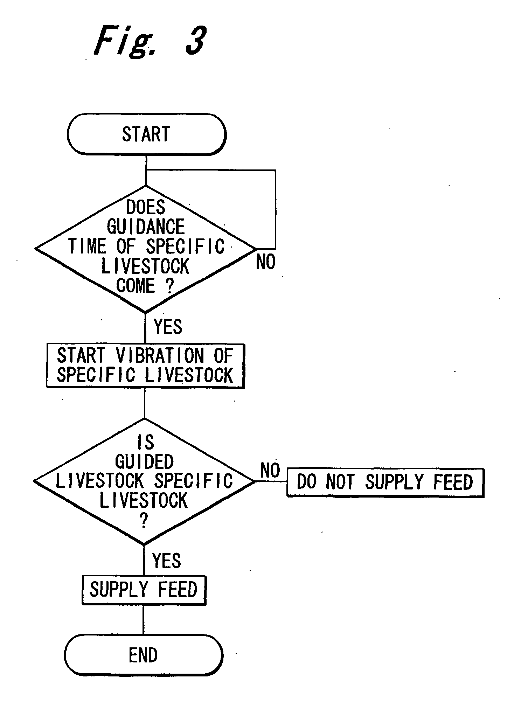

Next, referring to a flowchart shown in FIG. 3, the operation and the processing of the automatic feeding system B will be described in the concrete.

The operation and the processing in case specific concentrated feed is supplied to selected one in the herd of livestock will be described below.

(Start) After the setting of the automatic feeding system B is input via the keyboard 26, the operation of the system is started.

That is, guided livestock, the guidance start time of the livestock, the quantity of supplied feed, the vibration quantity and the vibration time of the stimulus generator 1 are input in order and stored.

After the setting is input, the automatic feeding system B is operated by inputting that the operation of the system is started.

(SP1) When the automatic feeding system B is operated, timing by the timer 24 is started.

When the timer 24 measures set guidance start time, the control means 2 outputs a signal to the stimulus generator 1 of specified livestock via the transmitter 5 based upon set time data.

(SP2) When the receiver 6 receives the electric wave output in SP1, the stimulus generator 1 starts vibration and guides the livestock.

The time of this vibration is measured by the timer 24 and the vibration is automatically stopped based upon set vibration time data.

(SP3) When the livestock to which the vibration is applied is guided to the automatic feeding unit 4 and puts the neck in a feed supply part, the identification of whether the livestock is livestock to which the vibration is applied or not is started by the identification unit 3.

(SP4) When the livestock is identified as livestock to which the vibration is applied, the automatic feeding unit 1 is operated, the feed of quantity set for the feed intake part in which the livestock puts the neck is supplied and the operation of the automatic feeding system B is stopped (SP6).

(SP5) When it is identified that the livestock is not livestock to which the vibration is applied, no feed is supplied to a feed supply part in which the livestock puts the neck.

According to this automatic feeding system B, concentrated feed can be automatically fed to livestock at arbitrary time without labor by inputting various data.

In case plural livestock are to be guided, the setting has only to be made so that the feeding start time of each livestock is set and when the feeding start time comes , a signal is output to the stimulus generator 1 of specified livestock.

For example, in case four livestocks (livestocks A to D) are to be fed every individual, each livestock can be guided in order by differently setting guidance start time such as the guidance start time of livestock A is set to nine o'clock, that of livestock B is set to eleven o'clock, that of livestock C is set to thirteen o'clock and that of livestock D is set to fifteen o'clock.

The above-mentioned automatic feeding system B enables only a certain individual to take feed by setting the feeding start time of the individual, however, as described below, it is also possible to set the guidance start time and the feeding termination time of a first individual, to detect that feeding to the individual is finished depending upon time, to guide the next individual when the termination is detected, to repeat this till the last individual and to stop the operation of the automatic feeding system B when feeding to the last individual is finished.

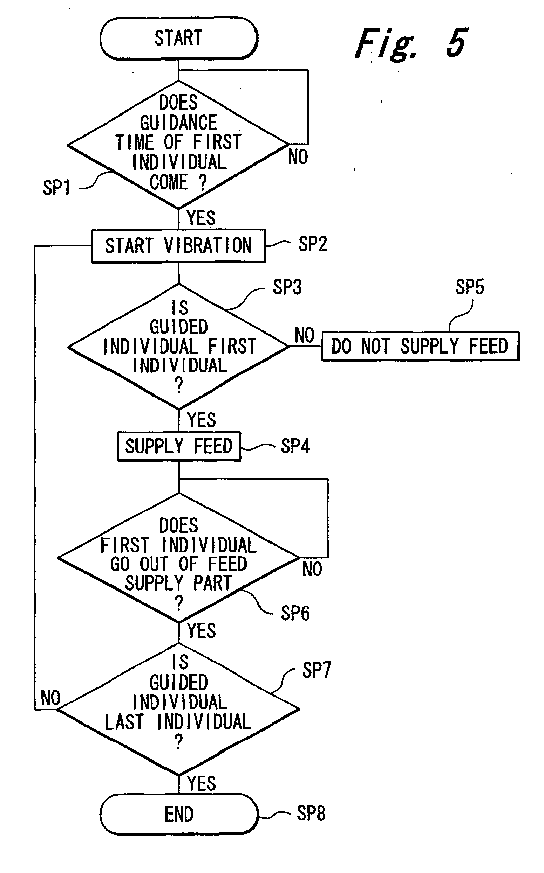

Referring to a flowchart shown in FIG. 5, this will be described in the concrete below.

(Start) After the setting of the automatic feeding system B is input via the keyboard 26, the operation of the system is started.

That is, grouping each individual, the order in feeding of each individual, the guidance start time and the feeding termination time of each individual, the quantity of supplied feed in each group, the vibration quantity and the vibration time of the stimulus generator 1 are input in order and stored.

The automatic feeding system B is operated by inputting that the operation of the system is to be started after the setting is input.

(SP1) When the automatic feeding system B is operated, timing by the timer 24 is started.

When the timer 24 measures the set guidance start time of a first individual, the control means 2 outputs a signal to the stimulus generator 1 via the transmitter 5 based upon set time data.

(SP2) When the receiver 6 receives an electric wave output in SP1 (SP6), the stimulus generator 1 starts vibration and guides the individual.

The time of this vibration is measured by the timer 24 and the vibration is automatically stopped based upon set vibration time data.

(SP3) When the individual to which vibration is applied is guided to the automatic feeding unit 4 and puts the neck in the feed supply part, the identification unit 3 starts the identification of whether the livestock is livestock to which the vibration is applied or not.

(SP4) When the identification unit identifies that the livestock is livestock to which the vibration is applied, the automatic feedingunit 1 is operated and the feed of quantity set for the feed intake part in which the livestock puts the neck is supplied.

(SP5) When the identification unit identifies that the livestock is not livestock to which the vibration is applied, no feed is supplied to the feed supply part in which the livestock puts the neck.

(SP6) The timer 24 measures set feeding termination time and detects whether the measured time is the feeding termination time of the last livestock or not.

In case the detected time is not the feeding termination time of the last livestock, the control means 2 outputs a signal to the stimulus generator 1 of the next livestock via the transmission 5 based upon set time data and SP2 to SP6 are repeated by the set number of individuals.

(SP7) In case the detected time is the feeding termination time of the last individual, the operation of the automatic feeding system B is stopped.

According to this automatic feeding system B, livestock can be automatically fed all from the initiation of guidance to the termination of feeding without labor by inputting various data.

In addition, feed can be taken in order every individual.

The above-mentioned automatic feeding system B enables each group to take feed in order by setting the feeding start time and the feeding termination time of each group, however, as described below, it is also possible to set only the guidance start time of a first individual, to detect that feeding this individual is finished, to guide the next individual when the termination is detected, to repeat this till the last individual and to stop the operation of the automatic feeding system B when feeding the last individual is finished.

Referring to a flowchart shown in FIG. 6, this will be described in the concrete below.

(Start) After the setting of the automatic feeding system B is input via the keyboard 26, the operation of the system is started.

That is, grouping an individual of livestock, the order in feeding of each individual, the guidance start time of a first individual, the quantity of feed supplied to each individual, the vibration quantity and the vibration time of the stimulus generator 1 are input in order and stored.

The automatic feeding system B is operated by inputting that the operation of the system is to be started after the setting is input.

(SP1) When the automatic feeding system B is operated, timing by the timer 24 is started.

When the timer 24 measures the set guidance start time of a first individual, the control means 2 outputs a signal to the stimulus generator 1 via the transmitter 5 based upon set time data.

(SP2) When the receiver 6 receives an electric wave output in SP1 (SP7), the stimulus generator 1 starts vibration and guides the individual.

The time of this vibration is measured by the timer 24 and the vibration is automatically stopped based upon set vibration time data.

(SP3) When the individual to which the vibration is applied is guided to the automatic feeding unit 4 and puts the neck in the feed intake part, the identification unit 3 starts the identification of whether the livestock is livestock to which the vibration is applied or not.

(SP4) When the identification unit identifies that the livestock is livestock to which the vibration is applied, the automatic feeding unit 1 is operated and the feed of set quantity is supplied.

(SP5) When the identification unit identifies that the livestock is not livestock to which the vibration is applied, no feed is supplied.

(SP6) It is detected whether livestock goes out of the feed supply part or not.

For the detection, the detection function of the identification unit 3 may be also utilized and another sensor may be also used.

(SP7) When it is detected that livestock goes out of the feed supply part, the control means 2 counts based upon set individual number data and in case the counted individual is not the last livestock, a signal is output to the stimulus generator 1 of the next livestock via the transmitter 5.

SP3 to SP7 are repeated by the set number of individuals.

(SP8) In case the individual counted in SP7 is the last livestock, the operation of the automatic feeding system B is stopped.

According to this automatic feeding system B, livestock can be also automatically fed all from the start of guidance to the termination of feeding without labor by inputting various data.

In addition, each individual of livestock can sequentially take required feed.

In the operation and the processing of the above-mentioned all systems, selected one in the herd of livestock is guided, however, the setting of the operation and the processing is not limited to the above-mentioned setting.

That is, instead of an individual or every individual, the herd of livestock is grouped into some and only a group arbitrarily selected can be also guided or each group can be also guided in order.

The operation and the processing are enabled by changing the setting in the above-mentioned flowcharts from an individual to a group including some livestocks.

According to the invention, as described above, as pastured livestock moves to a target place at time intended by a manager by itself, the guidance does not require labor.

Therefore, a large load which work for guiding the herd of livestock to a feeding place, a nursing place, a milking place, a mating place and a different pastureland imposes can be solved.

In addition, as the fine management of rearing every individual or every group is enabled even if a method of rearing is changed from tethering which deprives livestock of freedom and puts large stress on the livestock to pasturing which hardly puts stress, extremely healthy livestock can be reared.

Moreover, as further more livestock can be reared if the load of guidance work is solved, increase in the income of a dairy farmer can be also expected and the decrease of the workmen can be also stopped.

According to Claim 3 of the invention, in addition to the above-mentioned effect, only livestock to take feed can be fed and a situation that special concentrated feed to make specific livestock take is supplied to another livestock can be avoided.

Therefore, a load of the management of nourishing livestock can be solved, the waste of feed is avoided and the invention can greatly contribute to the reduction of the cost.

Having described specific preferred embodiments of the invention with reference to the accompanying drawings, it will be appreciated that the present invention is not limited to those precise embodiments, and that various changes and modifications can be effected therein by one of ordinary skill in the art without departing from the scope of the invention as defined by the appended claims.

## Claims

1. A system, comprising:
a stimulus generator mounted on livestock for applying a stimulus to the skin of the livestock; and
control means that controls the operation of the stimulus generator, wherein:
the stimulus generator is mounted on selected one or plural in the herd of livestock or the whole herd; and
only livestock on which the stimulus generator is operated is guided by inputting the output of the control means to the stimulus generator of the selected one or plural or the whole herd out of livestock on which the stimulus generator is mounted.

2. A system according to Claim 1, wherein:
the operation start time of a stimulus generator is set to different time every group composed of an individual or plural; and
at the operation start time, control means outputs a signal.

3. An automatic feeding system using the guidance system according to Claim 1 or 2, comprising:
an identification unit that identifies livestock guided by a stimulus generator, wherein:
only when the identification unit identifies guided livestock, control means operates an automatic feeding unit so that feed is supplied.
